# EUROPEAN PATENT SPECIFICATION

(11) **EP 1 072 855 B1**
(45) Date of publication and mention of the grant of the patent: **02.11.2006**
(21) Application number: 98944237.1
(22) Date of filing: 24.09.1998
(51) Int. Cl.: F27B 15/10, B01J 8/36, B01J 8/44, B01J 8/18, B01J 8/34, B01J 8/26, F27B 15/02

(54) **MULTICHAMBER DIVISION TYPE FLUIDIZED BED FURNACE**
WIRBELSCHICHTOFEN DES MULTIKAMMERDIVISIONSTYPES
FOUR A LIT FLUIDISE DIVISE EN CHAMBRES MULTIPLES

(30) Priority: 20.02.1998 JP 3897098
(43) Date of publication of application: 31.01.2001
(73) Proprietor: KAWASAKI JUKOGYO KABUSHIKI KAISHA, Kobe shi, Hyogo 650-8670 (JP)
(72) Inventor: NOMOTO, Hiroki, Tarumi-ku, Kobe-shi, Hyogo 655-0872 (JP); KISHIMOTO, Mitsuharu, Kako-gun, Hyogo 675-0151 (JP); SHIMIZU, Masaki, Kobe-shi, Hyogo 651-2272 (JP); TSUTSUMI, Kazuo, Kobe-shi, Hyogo 651-2215 (JP); KAZARI, Masahide, Akashi-shi, Hyogo 674-0056 (JP)
(74) Representative: West, Alan Harry
(86) International application number: PCT/JP1998/004300
(87) International publication number: WO 1999/042777

(56) References cited:
- EP-A- 0 144 172
- JP-A- 57 500 231
- US-A- 4 517 162
- US-A- 5 378 434
- US-A- 5 399 186

## Description

### TECHNICAL FIELD

The present invention relates to a fluidized bed reactor for treating ore fines in a fluidized state.

### BACKGROUND ART

When a gas passes upward through a bed of ore fines and a gas distributor like a multi-orifice plate or a pipe grid in a reactor and the gas velocity is moderately high, an upward frictional force between the ore fines and the gas counterbalances the weight of the ore fines. In such state, the ore fines are all suspended in the upward gas flow and the bed of the ore fines is considered to be fluidized and is referred to as fluidized bed. In the fluidized bed, the particles of the ore fines move up and down by the upward flowing gas. A temperature of the bed can be kept almost uniform and can easily be controlled. Therefore, the fluidized bed reactor has been widely utilized in various industrial fields. For example, recently, a process using a fluidized bed has been utilized to produce iron carbide to which much attention has been paid as a raw material for iron making and steel making. The iron carbide is produced by feeding a fluidized bed reactor with iron ore fines, and reacting the iron ore fines with a reducing gas (a hydrogen gas) and a carburizing gas (for example, a methane gas or the like) at a predetermined temperature to reduce and carburize iron oxide in the iron ore.

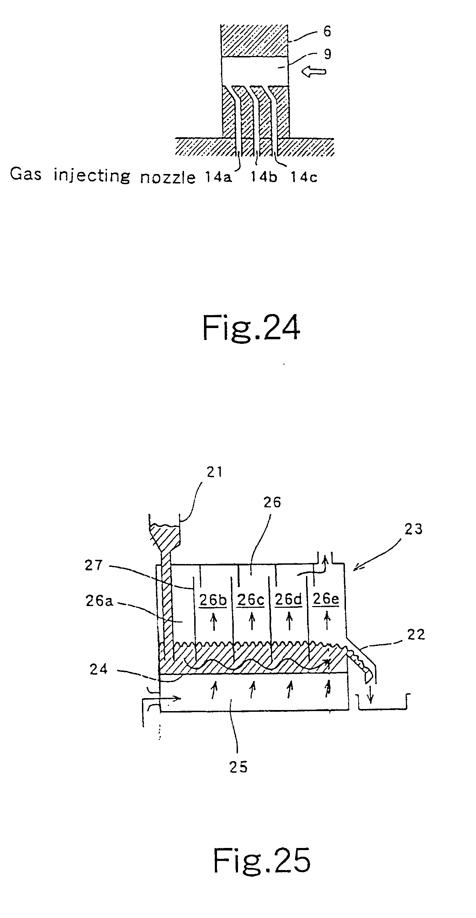

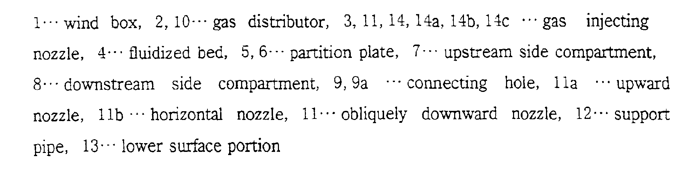

As an art of this kind, Japanese Provisional Patent Publication No. Hei 1 - 176003 has disclosed an apparatus for treating ore fines by use of a fluidized bed characterized in that the inside of a fluidized bed reactor 23 having a raw material inlet port 21 and an outlet port 22 is partitioned into upper and lower portions by a gas distributor 24, a gas wind box 25 is provided below the gas distributor 24, a fluidizing chamber 26 above the gas distributor 24 is partitioned into a plurality of compartments (26a to 26e) by a partition plate 27, a connecting hole is provided on the partition plate 27, and a raw material fed into the fluidized bed reactor 23 flow in a fluidized state from the inlet port 21 toward the outlet port 22 through the connecting hole as shown in Fig. 25.

In the fluidized bed reactor shown in Fig. 25, however, a movement from a compartment to other compartment is performed through the connecting hole which is a simple hole below the partition plate 27. Therefore, back mixing (a phenomenon in which the raw material in a downstream side compartment are reversely moved to an upstream side compartment) is sometimes caused depending on a pressure balance of adjacent compartments. For this reason, the effect obtained by partitioning the fluidized bed is lessened. In order to easily understand the present invention, the back mixing and defects of a conventional fluidized bed reactor related to the back mixing are described below in detail.

In the fluidized bed reactor, generally, ore fines acting as raw material are calcined or reacted. Therefore, it is preferable that a residence time of the ores in the reactor would be increased. In order to increase the residence time, it is applicable that a size of the reactor would be increased or a height of ores bed in the reactor would be increased. According to the former method, an equipment cost is much increased. According to the latter method, the size of the reactor is increased and a power of a gas supply compressor becomes considerably greater so that running cost is increased.

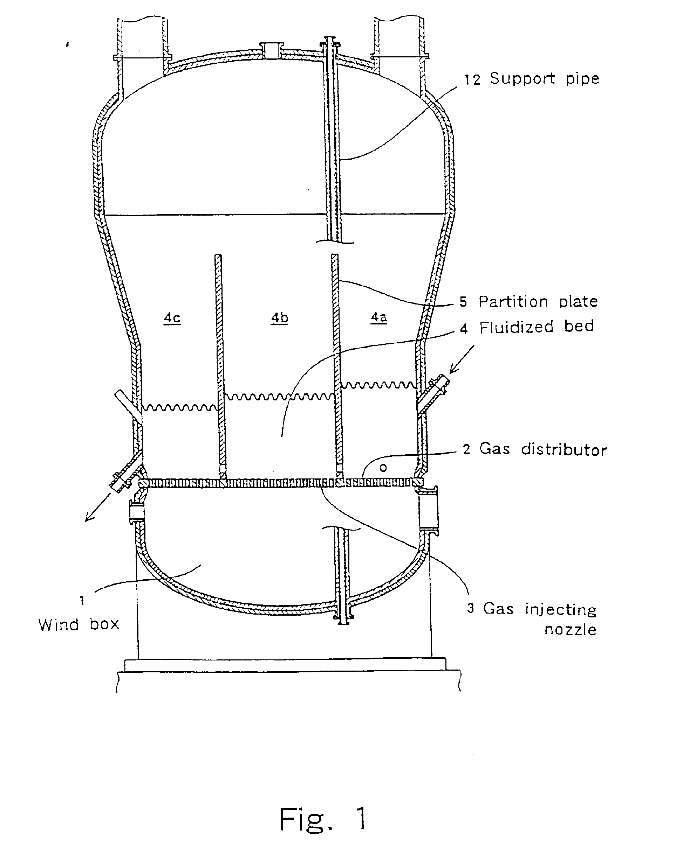

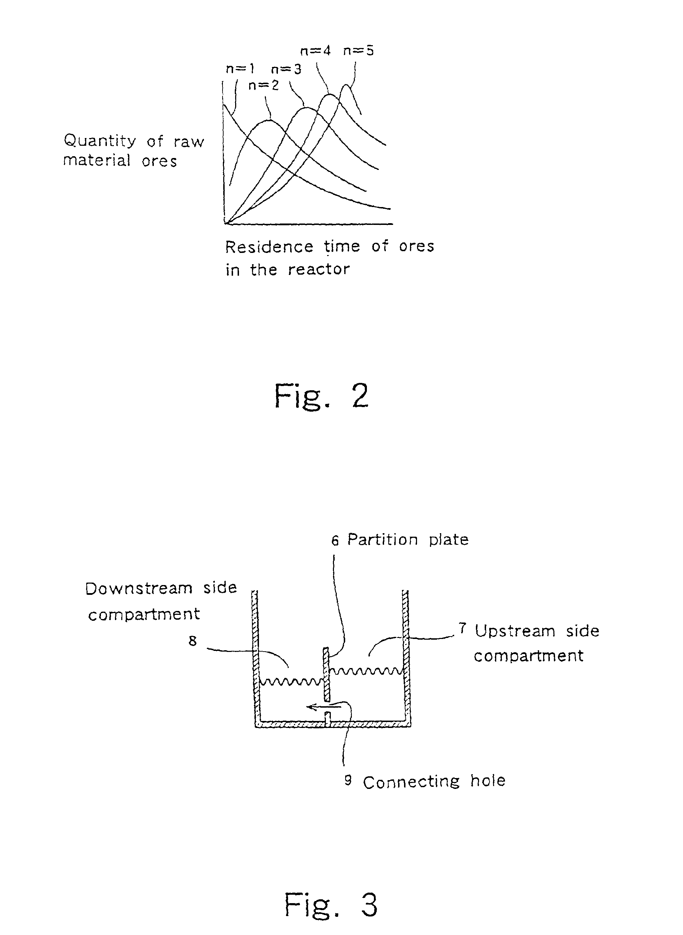

As a result, a fluidized bed reactor obtained by a combination of various well-known gas distributor and partition plates has been devised. For example, a multi-partitioned fluidized bed reactor using a gas distributor has been known, in which an wind box 1 is provided on a bottom, a gas is injected from a large number of gas injecting nozzles 3 provided on a gas distributor 2 above the wind box 1 to form a fluidized bed 4 of iron ore fines on the gas distributor 2, and the fluidized bed 4 is partitioned into a plurality of compartments (4a, 4b, 4c) by a partition plate 5 as shown in Fig. 1. If the fluidized bed is partitioned into a large number of compartments (the number n of partition of the fluidized bed is increased), the residence time of ores in the reactor is considerably increased as shown in Fig. 2. In Fig. 2, n = 1 denotes a case where the fluidized bed is not partitioned.

In particular, it is impossible to avoid multi- partitioning (for example, partition into four or seven compartments) of the fluidized bed in an iron carbide producing plant requiring the residence time of a few hours or more in the reactor. In order to realize the multi-partitioned fluidized bed having such a feature, the following two requirements have to be taken into consideration.

### ① No back mixing is caused.

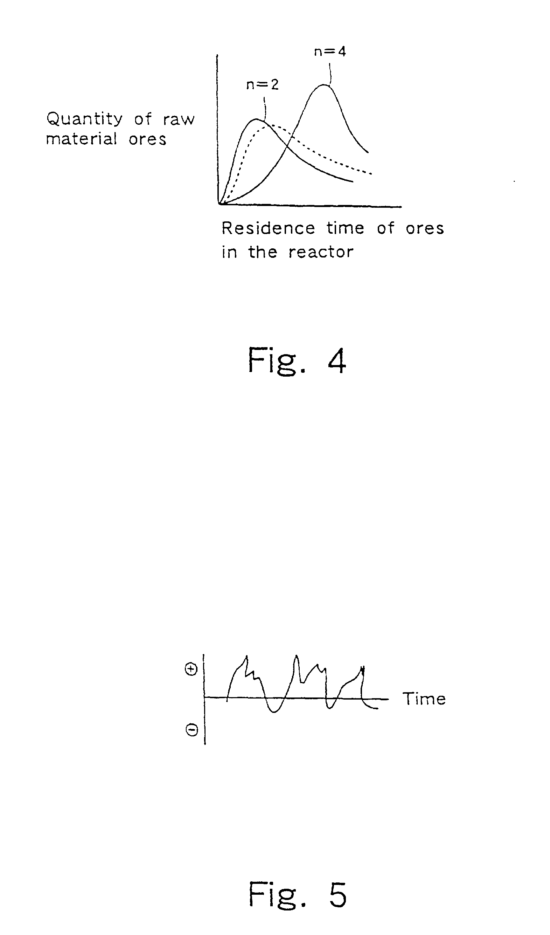

As shown in Fig. 3, it is required that most of ores should flow through a connecting hole 9 from an upstream side compartment 7 to a downstream side compartment 8 which are partitioned by a partition plate 6. Conversely, in a case where a phenomenon in which the ores flow from the downstream side compartment 8 to the upstream side compartment 7 (back mixing) is caused, the effect obtained by partitioning the fluidized bed is reduced. For example, if the back mixing is caused in case of the partition into four compartments, the residence time of ores in the reactor shown in Fig. 2 does not form a distribution curve of n = 4 but a distribution curve close to n = 2 as shown in a dotted line in Fig. 4.
② A difference in a fluidized bed height between the upstream side compartment and the downstream side compartment should be set to have a proper value.

While the fluidized bed height of the upstream side compartment would be greater than that of the downstream side compartment in order to obtain a flow from the upstream side to the downstream side, it is desirable that the difference in the fluidized bed height would be small. For example, if a seven-partitioned fluidized bed reactor has a difference in a fluidized bed height of 200 mm, the total difference becomes a great value of 1200 mm (200 mm × 6). Consequently, the fluidized bed reactor cannot be applied to a process having an average fluidized bed height of 1000 mm or 2000 mm (Extra considerations are required for the application. In other words, it is necessary to increase the height of the reactor. In addition, it is necessary for a supply gas pressure to be large so as to cope with the greatest fluidized bed height. Therefore, the equipment and running cost is increased. Furthermore, it is hard to uniformly distribute a gas to the compartments. More specifically, if a gas pressure loss of the gas distributor is not extremely increased, the gas is not uniformly distributed.)

One of the countermeasures for the back mixing in a multi-partitioned fluidized bed reactor according to the prior art which is based on the above-mentioned viewpoints is that a size of the connecting hole for connecting the adjacent compartments is reduced. If the size of the connecting hole is reduced, the difference in the fluidized bed height between upstream and downstream compartments is increased. Consequently, the above-mentioned disadvantages are given.

Furthermore, the defects of the conventional fluidized bed reactor will be described below.
③ If a length of the connecting hole is 100 mm or less, the back mixing is caused.

In general, a pressure at each point in the fluidized bed fluctuates in a shorter time period than 1 second, and ores are moved according to a pressure difference between an inlet of the connecting hole and an outlet thereof. For example, a flow of the ores passing through the connecting hole fluctuates as shown in Fig. 5. In Fig. 5, the mark "plus( + )" denotes a flow from the upstream side to the downstream side, and the mark "minus( - )" denotes a flow from the downstream side to the upstream side (back mixing). Accordingly, if the connecting hole has a small length (for example, 5 mm), the back mixing is easily caused.

In this case, however, when the connecting hole has a great length, the ores flowing in the direction of "minus( - )" stay in the connecting hole even if the flow in the direction of "minus( - )" is caused. As a result, only the flow in the direction of "plus(+)" is obtained.
④ In a case where the downflow comprising the dense ores is not formed in the vicinity of the inlet and outlet of the connecting hole, a void portion is generated in the connecting hole so that a large quantity of the gas easily pass through the connecting hole. Consequently, the difference in the fluidized bed height is badly increased. Furthermore, a large quantity of the gas can easily flow from the upstream side to the downstream side so that the back mixing is caused.

US-A-4 517 162 discloses a multiple partitioned fluidized bed reactor, wherein the bed heights in the compartments are the same.

In consideration of such problems of the prior art, it is an object of the present invention to provide a fluidized bed reactor having a proper difference in a fluidized bed height between a upstream and a downstream compartments without causing back mixing or with extremely small amount of back mixing.

### DISCLOSURE OF INVENTION

In order to attain the above-mentioned object, a vertical height of the position of the connecting hole is set to a constant value or less, a length of the connecting hole for connecting the adjacent compartments is set to a constant value or more, a distance between an inlet and outlet of the connecting hole and an end surface of a gas injecting nozzle is set to a constant value or more, and an angle formed by a line connecting a corner portion of an upper surface of the connecting hole and a gas injecting nozzle with respect to a horizontal plane is set greater than an angle of repose of raw material fines. Consequently, the raw material in an upstream side compartment can be moved to a downstream side compartment through the connecting hole substantially without causing fixed accumulation of the material in the vicinity of the inlet and the outlet of the connecting hole and back mixing.

An aspect of the present invention is directed to a multi-partitioned fluidized bed reactor of a bubbling bed type for performing a reaction while fluidizing raw material fines fed from one side surface of the reactor by a reaction gas injected from a large number of injecting nozzles provided on a gas distributor placed on a lower portion in the reactor, thereby discharging a product from the other side surface of the reactor, wherein a fluidized bed is partitioned into a plurality of compartments by partition plates, a connecting hole for moving the raw materials from an upstream side compartment to a downstream side compartment is provided in the lower part of the partition plate, and an average moving speed of the raw materials passing through the connecting hole is 500 mm/second or less, the multi-partitioned fluidized bed reactor meeting conditions that a vertical position of the connecting hole has a height which is 1/4 of a fluidized bed height or less, a length of the connecting hole is 100 mm or more, in a case where the gas injecting nozzle injects a gas upward in an almost vertical direction, a distance between an inlet of the connecting hole and an end surface of an upstream side nozzle is greater than 150 mm and a distance between an outlet of the connecting hole and an end surface of a downstream side nozzle is greater than 50 mm, in a case where the gas injecting nozzle injects a gas in an almost horizontal direction, the distance between the inlet of the connecting hole and the end surface of the upstream side nozzle is greater than 200mm and the distance between the outlet of the connecting hole and the end surface of the downstream side nozzle is greater than 100 mm, in a case where the gas injecting nozzle injects a gas obliquely downward, the distance between the inlet of the connecting hole and the end surface of the upstream side nozzle is greater than 200 mm and the distance between the outlet of the connecting hole and the end surface of the downstream side nozzle is greater than 100 mm, and an angle formed by a line connecting a corner portion of an upper surface of the connecting hole and a gas injecting port with respect to a horizontal plane is greater than an angle of repose of the raw material fines in any of openings on upstream and downstream sides of the connecting hole.

Based on a relationship with the function of the present invention, the reason for restriction on each constituent feature of the fluidized bed reactor having the above- mentioned constitution are described below in detail.

### (1) A flow of only gas in the connecting hole is not generated.

When a large amount of the gas flows in the connecting hole, a pressure loss is increased. Therefore, a difference in a fluidized bed height between upstream and downstream compartments is increased (for the same flow of ore fines) and back mixing is caused. In order to prevent the increase in said difference in the fluidized bed height and the back mixing, it is necessary to substantially fill the connecting hole with the ore fiens. More specifically, if only the ore fines are present in the connecting hole, the whole ore particles are moved so as to be pushed out from the upstream side toward the downstream side depending on a pressure difference between the upstream side fluidized bed and the downstream side fluidized bed (in a case where the ore fines are slightly moved from the downstream side toward the upstream side temporarily or instantaneously, there is no problem if such moving distance is smaller than a length of the connecting hole. )

It is preferable that the following means would be employed in order to minimize the gas flow in the connecting hole.
① Set a vertical position of the connecting hole to 1/4 of the fluidized bed height or less.

It is not preferred that the vertical position of the connecting hole is too high. The reason is as follows. The ore fines in the fluidized bed have a low density in an upper portion. If the connecting hole is placed in a high position, a gas easily flows into the connecting hole. Accordingly, it is preferable that the vertical position of the connecting hole would be 1/4 of the fluidized bed height or less.
② Form a downflow comprising dense ore fines in the vicinity of an inlet of the connecting hole.

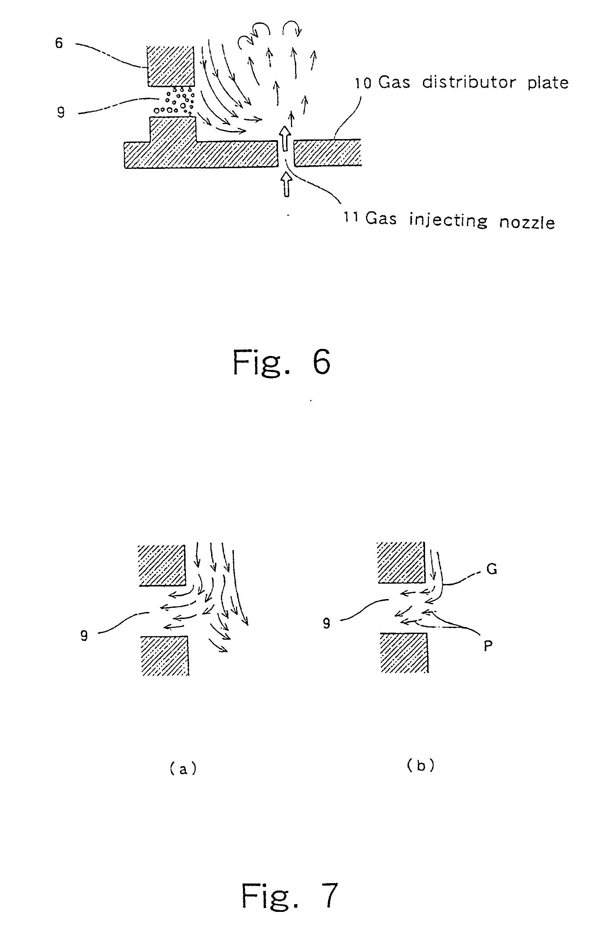

If a gas injecting nozzle 11 provided on a gas distributor plate 10 is positioned apart from a partition plate 6 by a proper distance as shown in Fig. 6, the ore fines are moved to generate a dense downflow in the vicinity of the connecting hole 9 as shown by an arrow in Fig. 6. The dense downflow in the vicinity of the inlet of the connecting hole blocks a gas flow into the connecting hole.
③ Increase a thickness of the downflow comprising the dense ore fines in the vicinity of the inlet of the connecting hole.

When the ore fines are moved from the upstream side to the downstream side through the connecting hole, a part of the downflow of the ore fines flows into the connecting hole 9 as shown in Fig. 7 (a). At this time, if a thickness of the downflow is small, not only ore fines P but also gas G is sucked in large quantities into the connecting hole 9 as shown in Fig. 7 (b). When a large quantity of the gas is sucked into the connecting hole, the above-mentioned trouble is caused. Therefore, a thickness of the downflow comprising the dense ore fines in the vicinity of the inlet of the connecting hole should be increased.

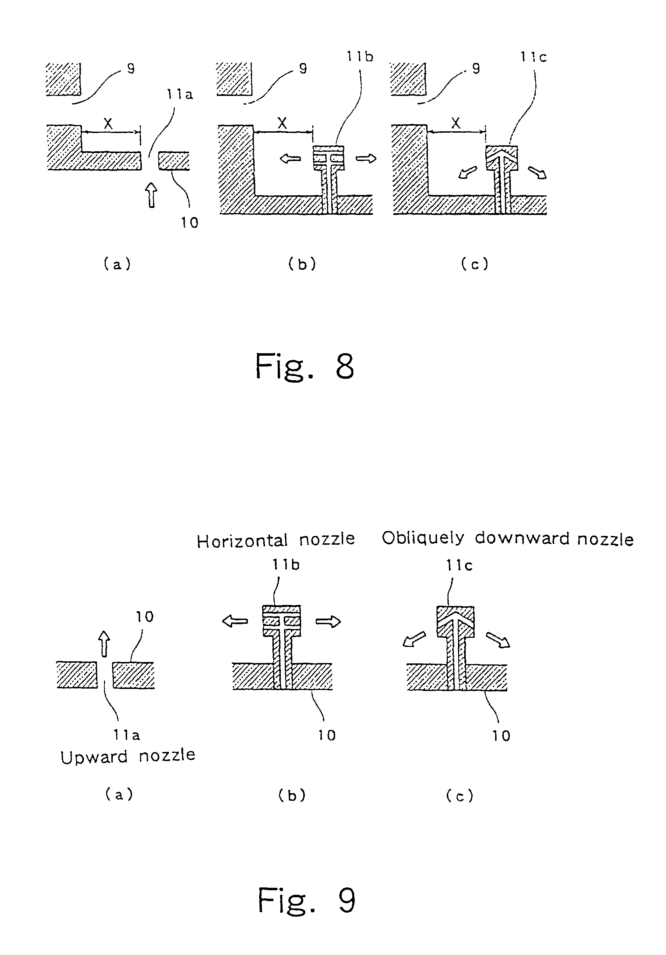

An experiment was performed in order to investigate such a cause as the downflow comprising the dense ore fines was formed in the vicinity of the inlet of the connecting hole and the thickness of the downflow was increased. As a result, it has been found out that the relative positions of the connecting hole 9 and the gas injecting nozzles (11a, 11b, 11c) are important as shown in Fig. 8. In a case where the gas injecting nozzle is too close to the connecting hole 9, the thickness of the downflow of the ore fines is very small (or the downflow is not formed) and a gas flow is generated in the connecting hole. Therefore, the ore fines cannot be moved in the connecting hole. On the other hand, it has been found out that the thickness of the downflow in the vicinity of the inlet of the connecting hole is increased as the gas injecting nozzle is positioned apart from the connecting hole 9.

In a case where an upward nozzle 11a for injecting a gas upward in an almost vertical direction is used as shown in Fig. 9 (a), it is preferable that a distance X between the inlet of the connecting hole 9 and an end surface of the upward nozzle 11a which is shown in Fig. 8 (a) would be set greater than 150 mm. In a case where a horizontal nozzle 11b for injecting a gas in an almost horizontal direction (a flow velocity in the nozzle is 10 to 80 m/second) is used as shown in Fig. 9 (b), it is preferable that a distance X between the inlet of the connecting hole 9 and an end surface of the horizontal nozzle 11b which is shown in Fig. 8 (b) would be set greater than 200 mm. In a case where an obliquely downward nozzle 11c for injecting a gas obliquely downward (a flow velocity in the nozzle is 10 to 80 m/second) is used as shown in Fig. 9 (c), it is preferable that a distance X between the inlet of the connecting hole 9 and an end surface of the obliquely downward nozzle 11c which is shown in Fig. 8 (c) would be set greater than 200 mm.

The limitation on the distance X can be applied to a case where an average moving speed of the ore fines in the connecting hole is 500 mm/second or less. The reason is as follows. If the average moving speed of the ore fines is higher than 500 mm/second, the ore fines are moved from the inlet of the connecting hoel toward the outlet thereof without limiting the distance X to a constant value or more and causing back mixing.

The average moving speed of the ore fines in the hole represents a numeric value (m/hr) obtained by dividing, by a sectional area (m²) of the connecting hole, a flow rate Q (m³ /hr) obtained by dividing a feed A (ton/hr) of the ore fines by a bulk specific gravity γ (ton/m³).
④ Form a downflow comprising the dense ore fines in the vicinity of the outlet of the connecting hole.

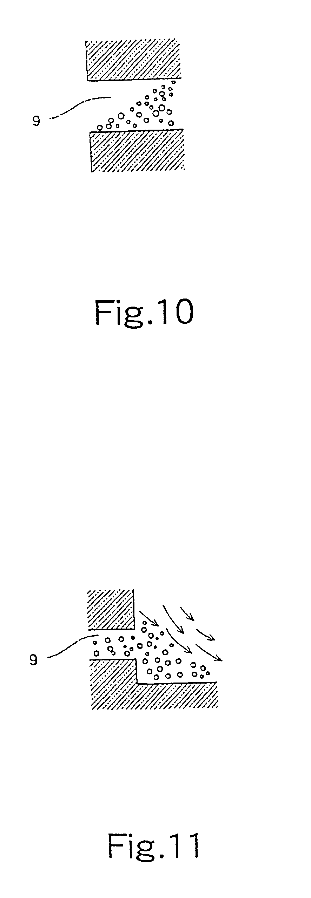

In a case where the downflow comprising the dense ore fines is not formed in the vicinity of the outlet of the connecting hole, the ore fines are not present in the outlet portion of the connecting hole 9 and an effective length of the connecting hole filled with the ore fines is reduced as shown in Fig. 10. Consequently, the back mixing is easily caused as described above. Therefore, it is preferable that the downflow comprising the dense ore fines would be formed in the vicinity of the outlet of the connecting hole as well as the inlet thereof. For this purpose, it is preferable that a distance X between an end surface of a gas injecting nozzle and the outlet of the connecting hole would be set to a constant value or more in the same manner as in the inlet. Furthermore, it is sufficient that the ore fines in the connecting hole are pressed so as not to slip off on the outlet side and that a thickness of a downflow is smaller than on the inlet side, which is described specifically below.

In a case where the upward nozzle 11a for injecting a gas upward in an almost vertical direction is used as shown in Fig. 9 (a), it is preferable that the distance X would be set greater than 50 mm.

In a case where the horizontal nozzle 11b for injecting a gas in an almost horizontal direction is used as shown in Fig. 9 (b), it is preferable that the distance X would be set greater than 100 mm.

In a case where the obliquely downward nozzle 11c for injecting a gas obliquely downward is used as shown in Fig. 9 (c), it is preferable that the distance X would be set greater than 100 mm.
(2) Cause no accumulation of the ore fines before and after the connecting port.

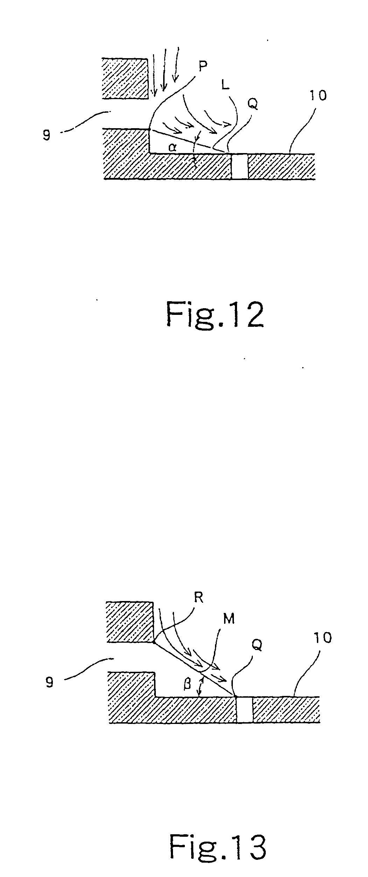

If the ore fines are accumulated before and after the connecting hole as shown in Fig. 11, the ore fines in the connecting hole are not moved. In order to move the ore fines in the hole, it is necessary to considerably increase a difference in a fluidized bed height between compartments before and after the connecting hole (for example, a wasteful value of several hundreds mm would be set). The generation of the accumulation portion depends on an angle formed by a line connecting the connecting hole and the gas injecting port with respect to a horizontal plane. In general, the ore fines are lifted up by a gas flow in the vicinity of the gas injecting nozzle. Therefore, if an angle α formed by a line L connecting a corner portion P of a lower surface of a connecting hole 9 and a gas injecting port Q with respect to the horizontal plane is greater than an angle of repose of the ore fines as shown in Fig. 12, the accumulation portion of the ore fines is not generated in the vicinity of the inlet of the connecting hole 9 but the ore fines in the connecting hole 9 are moved from the inlet toward the outlet. In reality, it has been found out that the movement of the ore fines in the connecting hole 9 is not hindered even if the angle α is slightly smaller than the angle of repose of the ore fines. That is to say, it has been found out that there is no problem if an angle β formed by a line M connecting a corner portion R of an upper surface of the connecting hole 9 and the gas injecting port Q with respect to the horizontal plane is greater than the angle of repose of the ore fines as shown in Fig. 13. The reason is as follows. Even if the angle α is smaller than the angle of repose of the ore fines and a little accumulation portion is present in the vicinity of the inlet of the connecting hole, the movement of the ore fines in the connecting hole is not substantially hindered because a considerable quantity of the ore fines on the line M and in the vicinity thereof (below the line M) slides down a slant together with a downflow.

Accordingly, it is preferable that the angle formed by the line connecting the corner portion of the upper surface of the connecting hole 9 and the gas injecting port with respect to the horizontal plane would be greater than the angle of repose of the ore fines.

It is preferable that a relationship between the angles α and β and the angle of repose of the ore fines would be the same as in the outlet of the connecting hole.

The foregoing results are similarly applied to various well-known gas distributor as well as the gas distributor plate.
(3) Others

① It is preferable that the lower surface of the connecting hole would be positioned above a tip of an injection portion of the gas injecting nozzle. The reason is that an accumulation portion is generated in the connecting hole with difficulty.
② It is preferable that a diameter of the opening on the upstream side of the connecting hole would be gradually reduced toward the downstream side. The reason is that the ore fines easily flow into the connecting hole.
③ It is preferable that a lower surface portion of the opening on the upstream side of the connecting hole would protrude from an end surface of a partition plate toward the upstream side. The reason is that a downflow comprising the dense ore fines is easily generated in the vicinity of the inlet of the connecting hole. It is preferable that a corner portion of an upper surface of a protruding portion would be obliquely cut. The reason is that an ore accumulation portion is generated in the vicinity of the inlet of the connecting hole with difficulty.
④ It is preferable that the upper surface of the protruding portion would be slanted downward from the upstream side toward the downstream side. The reason is that the ore fines easily flow in the connecting hole.
⑤ It is preferable that the connecting hole would be slanted downward from the upstream side toward the downstream side. The reason is that the ore fines easily flow in the connecting hole.
⑥ It is preferable that an angle of the slant would be greater than an angle of repose of the ore fines. The reason is that an accumulation portion is generated with difficulty.
⑦ It is preferable that a lower surface portion of an opening on the downstream side of the connecting hole would protrude from the end surface of the partition plate toward the downstream side. The reason is that a downflow comprising the dense ore fines is formed in the vicinity of the outlet of the connecting hole. It is preferable that a corner portion of an upper surface of a protruding portion would be obliquely cut. The reason is that an accumulation portion is generated in the vicinity of the outlet of the connecting hole with difficulty.
⑧ It is preferable that the connecting hole would protrude from both end surfaces of the partition plate on the upstream and downstream sides. The reason is that a downflow comprising the dense ore fines is formed in the vicinity of the inlet and outlet sides of the connecting hole irrespective of a thickness of the partition plate.
⑨ It is preferable that one or more gas injecting nozzles would be provided in a middle portion of the connecting hole and that a reaction gas would be injected from the gas injecting nozzle(s) into the connecting hole. Consequently, the ore fines are not accumulated in the connecting hole. As to the reaction gas, a part of gas introduced into the fluidized bed reactor or a gas introduced from the outside can be used. A porous material, for example, a porous refractory material (brick) can also be used as the tip of the gas injecting nozzle. It is preferable that the tip of the gas injecting nozzle would be bent obliquely from the upstream side toward the downstream side. The reason is that the effect of inhibiting the accumulation of the ore fines in the connecting hole can further be enhanced.

Since the present invention has the above-mentioned constitution, the following effects can be obtained.
① According to the first aspect of the present invention, it is possible to provide a fluidized bed reactor in which raw material fines can be moved from the upstream side toward the downstream side in the connecting hole while keeping a proper difference in a fluidized bed height between compartments on the upstream and downstream sides without causing back mixing. Accordingly, it is possible to realize a fluidized bed reactor having low equipment and running cost.
② According to the second aspect of the present invention, it is possible to provide a fluidized bed reactor in which the raw material fines are accumulated in the connecting hole with difficulty.
③ According to the third aspect of the present invention, it is possible to provide a fluidized bed reactor in which the raw material fines easily flow into the connecting hole.
④ According to the fourth aspect of the present invention, it is possible to provide a fluidized bed reactor in which a downflow comprising the dense raw material fines is easily formed in the vicinity of the inlet of the connecting hole.
⑤ According to the fifth aspect of the present invention, it is possible to provide a fluidized bed reactor in which the raw material fines are accumulated in the vicinity of the inlet of the connecting hole with difficulty.
⑥ According to the sixth, seventh and eighth aspects of the present invention, it is possible to provide a fluidized bed reactor in which the raw material fines are easily moved in the connecting hole.
⑦ According to the ninth aspect of the present invention, it is possible to provide a fluidized bed reactor in which a downflow comprising the dense raw material fines is easily formed in the vicinity of the outlet of the connecting hole.
⑧ According to the tenth aspect of the present invention, it is possible to provide a fluidized bed reactor in which the raw material fines are accumulated in the vicinity of the outlet of the connecting hole with difficulty.
⑨ According to the eleventh aspect of the present invention, it is possible to provide a fluidized bed reactor in which a downflow comprising the dense raw material fines is easily formed in the vicinity of the inlet and outlet of the connecting hole, the back mixing is caused with difficulty, and the raw material fines can be moved from the upstream side toward the downstream side in the connecting hole irrespective of a thickness of the partition plate.
⑩ According to the twelfth, thirteenth and fourteenth aspects of the present invention, it is possible to provide a fluidized bed reactor in which the raw material fines are accumulated in the connecting hole with difficulty.

Although the present invention has fully been described by way of example with reference to the accompanying drawings, it is to be understood that various changes and modifications will be apparent to those skilled in the art. Therefore, unless otherwise such changes and modifications depart from the scope of the invention, they should be construed as being included therein.

### BRIEF DESCRIPTION OF DRAWINGS

Figure 1 is a longitudinal sectional view showing a multi-partitioned fluidized bed reactor according to an embodiment of the present invention;
Figure 2 is a chart showing a relationship between a quantity of raw material ores in the fluidized bed reactor and a residence time of ores in the reactor;
Figure 3 is a view typically illustrating a state in which the raw materials are moved in the fluidized bed reactor;
Figure 4 is a chart showing a relationship between the quantity of the raw material ores in the fluidized bed reactor and the residence time of ores in the reactor;
Figure 5 is a chart illustrating a state in which the raw materials are moved in a connecting hole for connecting compartments;
Figure 6 is a view illustrating a flow of ore fines in the vicinity of an inlet of the connecting hole;
Figures 7 (a) and 7 (b) are another views illustrating the flow of the ore fines in the vicinity of the inlet of the connecting hole;
Figures 8 (a), 8 (b) and 8 (c) are views illustrating a distance X between the inlet of the connecting hole and an end surface of a gas injecting nozzle;
Figure 9 (a) is a sectional view showing an upward nozzle, Figure 9 (b) is a sectional view showing a horizontal nozzle, and Figure 9 (c) is a sectional view showing an obliquely downward nozzle;
Figure 10 is a view illustrating filling conditions of the ore fines in the vicinity of an outlet of the connecting hole;
Figure 11 is a view illustrating a fixed accumulation of the ore fines in the vicinity of the inlet of the connecting hole;
Figure 12 is a view illustrating an angle ( α ) formed by a line connecting a corner portion P of a lower surface of an opening on the upstream side of the connecting hole and a gas injecting port Q with respect to a horizontal plane;
Figure 13 is a view illustrating an angle ( β ) formed by a line connecting a corner portion R of an upper surface of the opening on the upstream side of the connecting hole and the gas injecting port Q with respect to the horizontal plane;
Figures 14 (a) and 14 (b) are sectional views showing an example in which a diameter of the opening on the upstream side of the connecting hole is gradually reduced toward the downstream side;
Figure 15 is a sectional view showing an example in which a lower surface portion of the opening on the upstream side of the connecting hole protrudes from an end surface of a partition plate;
Figure 16 is a sectional view showing an example in which a corner portion of an upper surface of a protruding portion in Figure 15 is obliquely cut;
Figure 17 is a sectional view showing an example in which the upper surface of the protruding portion in Figure 15 is slanted downward from the upstream side toward the downstream side;
Figure 18 is a sectional view showing an example in which the connecting hole is slanted downward from the upstream side toward the downstream side;
Figure 19 is a sectional view showing an example in which a lower surface portion of an opening on the downstream side of the connecting hole protrudes from the end face of the partition plate;
Figure 20 is a sectional view showing an example in which a corner portion of an upper surface of a protruding portion in Figure 19 is obliquely cut;
Figure 21 is a sectional view showing an example in which the connecting hole protrudes from both end surfaces of the partition plate on the upstream and downstream sides;
Figure 22 is a sectional view showing an example in which a gas injecting nozzle is provided in a middle portion of the connecting hole;
Figure 23 is a sectional view showing an example in which a porous material is used as a tip of the gas injecting nozzle provided in the middle portion of the connecting hole;
Figure 24 is a sectional view showing an example in which the tip of the gas injecting nozzle provided in the middle portion of the connecting hole is obliquely bent from the upstream side toward the downstream side; and
Figure 25 is a schematic view showing a structure of a fluidized bed reactor according to an example of the prior art.

### BEST MODE FOR CARRYING OUT THE INVENTION

Embodiments of the present invention will be described below together with experimental conditions with reference to the drawings.
(1) Experimental Condition (one example)
① Raw Material Fines
   a. 2. 0 ton/hr of iron ore fines having a bulk density of 2. 0 ton/m³ was fed into experimental equipment of a fluidized bed reactor.
   b. 2.0 ton/hr of silica fines having a bulk density of 1. 5 ton/m³ was fed into the experimental equipment of the fluidized bed reactor.

As the experimental equipment of the fluidized bed reactor was used a cylindrical transparent plastic vessel capable of clearly observing a fluidization phenomenon of the raw material fines. The experimental equipment is very different from the actual fluidized bed reactor shown in Fig. 1 in that a support pipe 12 for supporting a gas distributor plate 2 is not provided and one partition plate 5 for partitioning a fluidized bed 4 is provided. Furthermore, an air was used as gas and an ordinary temperature was set.
② A height of a connecting hole provided in the lower part of the partition plate was set to about 1/4 of a fluidized bed height or less.
③ The connecting hole had a bore of 150 mm.
④ The average moving speed of the raw material fines passing through the connecting hole is 20 mm/second for the iron ore fines, and 30 mm/second for the silica fines under the conditions ① and ③.

### (2) Basic Form (Structure shown in Fig. 8)

The connecting hole 9 has a length of 200 mm. In a case where the gas injecting nozzle injected a gas upward in an almost vertical direction, a distance X on the inlet side was set to 200 mm and a distance X on the outlet side was set to 200 mm. In a case where the gas injecting nozzle injected a gas obliquely downward, the distance X on the inlet side was set to 250 mm and the distance X on the outlet side was set to 200 mm. An angle β (see Fig. 13) was set to 45° (the angle of repose of the iron ore fines is 40° and that of the silica fines is 30° ).

Under the above-mentioned conditions, a fluidization experiment for the iron ore fines or the silica fines was performed. By the influence of a pressure difference on the inlet and outlet sides of the connecting hole 9, any of said raw material fines passing through the connecting hole 9 was moved from a compartment on the upstream side to a compartment on the downstream side while performing slight movement toward the inlet side after movement toward the outlet side by a constant distance without causing back mixing.

In a case where the gas injecting nozzle injected a gas upward in the almost vertical direction, and the distance X on the inlet side of the connecting hole 9 was set to 150 mm or less and the distance X on the outlet side of the connecting hole 9 was set to 50 mm or less, the gas flowed into the connecting hole so that a difference in a fluidized bed height between the compartments on the upstream and downstream sides was remarkably increased (about 200 mm) and the back mixing was caused. In a case where the gas injecting nozzle injected a gas obliquely downward, and the distance X on the inlet side of the connecting hole 9 was set to 200 mm or less and the distance X on the outlet side of the connecting hole 9 was set to 100 mm or less, the same phenomenon occurred.

In a case where the angle β was equal to or less than the angle of repose of the iron ore fines, an accumulation portion was generated in the vicinity of the inlet of the connecting hole so that the raw material fines could not be moved in the connecting hole.
(3) A diameter of the opening on the upstream side of the connecting hole is gradually reduced toward the downstream side.

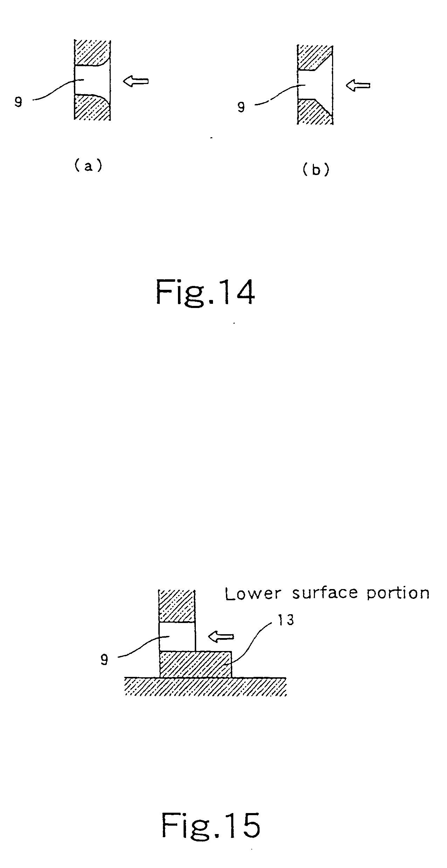

It is shown in Fig. 14 (a) that the opening on the upstream side of the connecting hole 9 is formed like a curved surface. It is shown in Fig. 14 (b) that the opening on the upstream side of the connecting hole 9 is obliquely cut. It was confirmed that the raw material fines smoothly flowed into the connecting hole 9 with any of the above- mentioned forms.
(4) A lower surface portion of the opening on the upstream side of the connecting hole is caused to protrude from an end surface of a partition plate toward the upstream side.

It was confirmed that a downflow comprising the dense ore fines was formed in the vicinity of the inlet of the connecting hole 9 when a lower surface portion 13 of the opening on the upstream side of the connecting hole 9 was caused to protrude toward the upstream side as shown in Fig. 15. It was confirmed that the ore fines were moved from the inlet toward the outlet in the connecting hole 9 without causing back mixing.
(5) A corner portion of an upper surface of a protruding portion shown in Fig. 15 is obliquely cut.

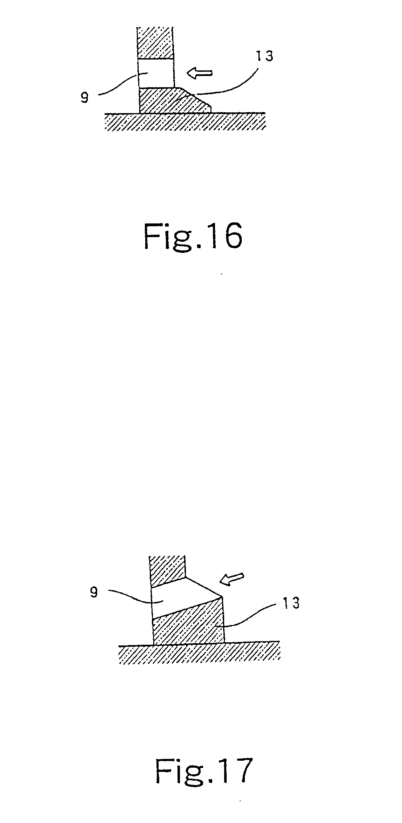

With the structure shown in Fig. 16 a little accumulation portion of the ore fines was generated on the lower surface portion 13. It was confirmed that the accumulation portion was hardly present by obliquely cutting the corner portion of the upper face of the lower surface portion 13 as shown in Fig. 16.
(6) The upper surface of the protruding portion shown in Fig. 15 is slanted by 30° downward from the upstream side toward the downstream side.

When the lower surface portion 13 is slanted by 30° downward from the upstream side toward the downstream side as shown in Fig. 17, a dead weight of the ore fines is added to a pressure difference of a fluidized bed between the inlet and outlet sides of the connecting hole 9. Therefore, it was confirmed that the movement of the ore fines in the connecting hole 9 was slightly promoted as compared with the structure shown in Fig. 15 or 16.
(7) The connecting hole is slanted downward from the upstream side toward the downstream side.

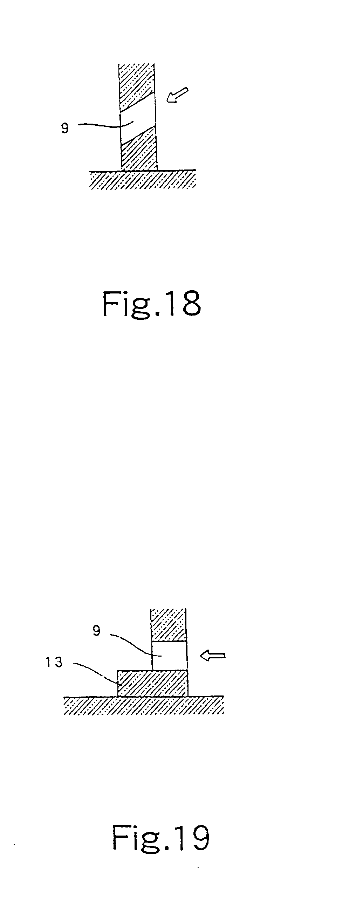

It was confirmed that the movement of the ore fines in the connecting hole 9 was slightly promoted as compared with the structure shown in Fig. 8 when the connecting hole 9 was slanted by 30° downward from the upstream side toward the downstream side as shown in Fig. 18.

It is preferable that the angle of slant in Figs. 17 and 18 would be set to about 30° or more in order to promote the movement of the ore fines.
(8) A lower surface portion of the opening on the downstream side of the connecting hole is caused to protrude from the end surface of the partition plate toward the downstream side.

It was confirmed that a downflow comprising the dense ore fines was formed in the vicinity of the outlet of the connecting hole 9 when a lower surface portion 13 of the opening on the downstream side of the connecting hole 9 was caused to protrude toward the downstream side as shown in Fig. 19. It was confirmed that the ore fines were moved from the inlet toward the outlet in the connecting hole 9 without causing back mixing.
(9) A corner portion of a protruding portion shown in Fig. 19 is obliquely cut.

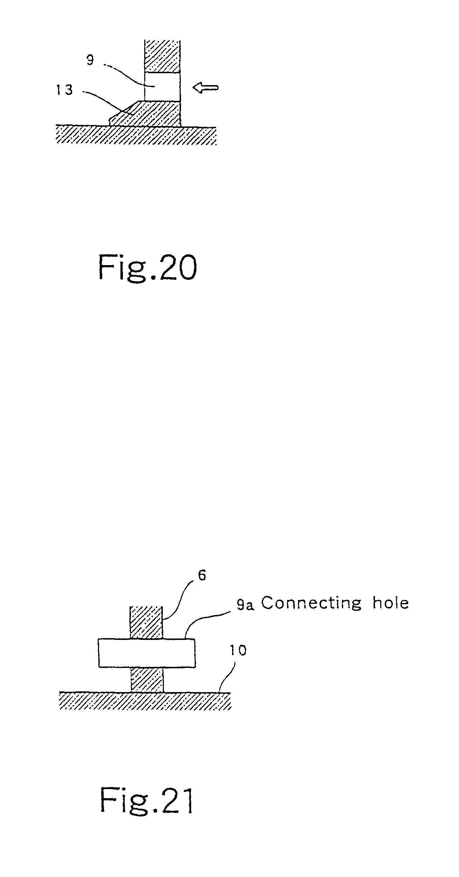

With the structure shown in Fig. 19, a little accumulation portion of the ore fines was generated on the lower surface portion 13. It was confirmed that the accumulation portion was hardly present by obliquely cutting the corner portion of the upper surface of the lower surface portion 13 as shown in Fig. 20.
(10) A connecting hole having a length of 100 mm or more is caused to protrude toward the upstream and downstream sides in the lower part of a partition plate having a thickness of 100 mm or less.

While the partition plate is cut to provide the connecting hole in any of the above-mentioned examples, it was confirmed that the same effects could be obtained with a pipe-shaped connecting hole 9a shown in Fig. 21 provided on a partition plate 6.
(11) A gas injecting nozzle is provided in a middle portion of the connecting hole.

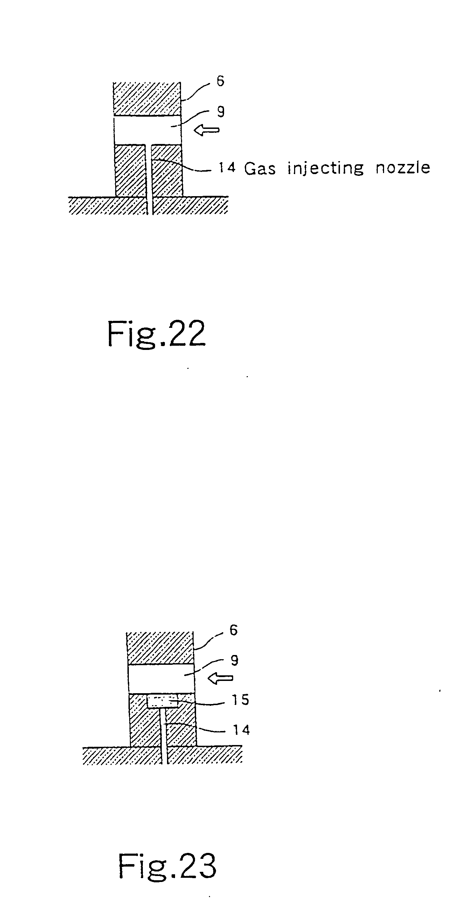

As shown in Fig. 22, a gas injecting nozzle 14 is provided in the middle portion of the connecting hole 9, and a part of a reaction gas introduced into the fluidized bed reactor is injected into the connecting hole 9 through the gas injecting nozzle 14. Consequently, it was confirmed that the accumulation portion of the ore fines in the connecting hole 9 was hardly present.

Fig. 23 shows a case where a porous material 15 (a porous refractory material (brick)) is used as a tip of the gas injecting nozzle 14. It was confirmed that the ore fines could be prevented from being accumulated in the connecting hole 9 in the same manner as in Fig. 22 when the tip of the gas injecting nozzle 14 was made of the porous material as shown in Fig. 23.

In Fig. 24, three gas injecting nozzles 14a, 14b and 14c are provided on the connecting hole 9, and the tips of said nozzles are bent obliquely from the upstream side toward the downstream side. Consequently, it was confirmed that the accumulation of the ore fines in the connecting hole 9 was completely eliminated.

### IUDUSTRIAL APPLICABILITY

Since the present invention has the above-mentioned constitution, a fluidized bed reactor in accordance with the present invention has a proper difference in a fluidized bed height between a upstream and a downstream compartments without causing back mixing or with extremely small amount of back mixing. Accordingly, the fluidized bed reactor of the present invention is suitable for treating ore fines in a fluidized state.

## Claims

1. A multi- partitioned fluidized bed reactor of a bubbling bed type for treating ore fines while fluidizing raw material fines fed from one side surface of the reactor by a reaction gas injected from a large number of gas injecting nozzles provided on a gas distributor placed on a lower portion in the reactor, thereby discharging a product from the other side surface of the reactor, wherein a fluidized bed is partitioned into a plurality of compartments by partition plates, a connecting hole for moving the raw materials by a difference in a fluidized bed height from an upstream side compartment to a downstream side compartment is provided in the lower part of the partition plate, an average moving speed of the raw materials passing through the connecting hole is 500 mm/second or less and an angle formed by a line connecting a corner portion of an upper surface of the connecting hole and a gas injection port with respect to a horizontal plane is greater than an angle of repose of the raw material fines in any of the openings on the upstream or downstream sides of the connecting hole, the multi-partitioned fluidized bed reactor meeting all the conditions that:
a vertical position of the connecting hole has a height which is 1/4 of a fluidized bed height or less;
a length of the connecting hole is 100 mm or more;
in a case where the gas injecting nozzle injects a gas upward in an almost vertical direction, a distance between an inlet of the connecting hole and an end surface of an upstream side nozzle is greater than 150 mm and a distance between an outlet of the connecting hole and an end surface of a downstream side nozzle is greater than 50 mm;
in a case where the gas injecting nozzle injects a gas in an almost horizontal direction, the distance between the inlet of the connecting hole and the end surface of the upstream side nozzle is greater than 200 mm and the distance between the outlet of the connecting hole and the end surface of the downstream side nozzle is greater than 100 mm;
in a case where the gas injecting nozzle injects a gas obliquely downward, the distance between the inlet of the connecting hole and the end surface of the upstream side nozzle is greater than 200 mm and the distance between the outlet of the connecting hole and the end surface of the downstream side nozzle is greater than 100 mm.

2. The multi- partitioned fluidized bed reactor of Claim 1 wherein a lower surface of the connecting hole is positioned above a gas injecting portion of the gas injecting nozzle.

3. The multi-partitioned fluidized bed reactor of Claim 1 or 2 wherein a diameter of the opening on the upstream side of the connecting hole is gradually reduced toward the downstream side.

4. The multi-partitioned fluidized bed reactor of Claim 1 or 2 wherein a lower surface portion of the opening on the upstream side of the connecting hole protrudes from an end surface of the partition plate toward the upstream side.

5. The multi- partitioned fluidized bed reactor of Claim 4 wherein a corner portion of an upper surface of a protruding portion is obliquely cut.

6. The multi- partitioned fluidized bed reactor of Claim 4 wherein an upper surface of a protruding portion is slanted downward from the upstream side toward the downstream side.

7. The multi-partitioned fluidized bed reactor of Claims 1, 2 or 3 wherein the connecting hole is slanted downward from the upstream side toward the downstream side.

8. The multi-partitioned fluidized bed reactor of Claim 6 or 7 wherein an angle of slant is greater than an angle of repose of the raw material fines.

9. The multi-partitioned fluidized bed reactor of Claim 1 wherein a lower surface portion of the opening on the downstream side of the connecting hole protrudes from an end surface of the partition plate toward the downstream side.

10. The multi-partitioned fluidized bed reactor of Claim 9 wherein a corner portion of an upper surface of a protruding portion is obliquely cut.

11. The multi-partitioned fluidized bed reactor of Claim 1 wherein the connecting hole protrudes from both end surfaces of the partition plate on the upstream and downstream sides.

12. The multi-partitioned fluidized bed reactor of Claim 1 wherein one or more gas injecting nozzles are provided in a middle portion of the connecting hole, and a reaction gas is injected from the gas injecting nozzle into the connecting hole.

13. The multi-partitioned fluidized bed reactor of Claim 12 wherein a porous material is used as a tip of the gas injecting nozzle.

14. The multi-partitioned fluidized bed reactor of Claim 12 wherein a tip of the gas injecting nozzle is obliquely bent from the upstream side toward the downstream side.

## Patentansprüche

1. Mehrfach geteilter Wirbelschichtreaktor eines Blasenwirbelschichttyps zur Behandlung von Erzfeinstoffen, während Rohmaterialfeinstoffe, die von einer Seitenfläche des Reaktors zugeführt werden, durch ein Reaktionsgas, das aus einer großen Anzahl von Gaseinspritzdüsen eingespritzt wird, die an einem Gasverteiler bereitgestellt sind, der an einem unteren Abschnitt im Reaktor angeordnet ist, verflüssigt werden, wodurch von der anderen Seitenfläche des Reaktors ein Produkt abgelassen wird, wobei eine Wirbelschicht durch Trennplatten in mehrere Kammern geteilt ist, im unteren Teil der Trennplatte eine Verbindungsöffnung bereitgestellt ist, um die Rohmaterialien durch einen Unterschied in einer Wirbelschichthöhe von einer stromaufwärts befindlichen Kammer zu einer stromabwärts befindlichen Kammer zu bewegen, wobei eine durchschnittliche Bewegungsgeschwindigkeit der Rohmaterialien, die durch die Verbindungsöffnung verlaufen, 500 mm/Sekunde oder geringer ist, und ein Winkel, der durch eine Linie, die einen Eckenabschnitt einer oberen Fläche der Verbindungsöffnung und eine Gaseinspritzöffnung verbindet, in Bezug auf eine wagerechte Ebene gebildet wird, größer als ein Schüttwinkel der Rohmaterialfeinstoffe in einer beliebigen der Öffnungen an der stromaufwärts oder stromabwärts befindlichen Seite der Verbindungsöffnung ist, wobei der mehrfach geteilte Wirbelschichtreaktor die Bedingungen erfüllt, dass eine senkrechte Position der Verbindungsöffnung eine Höhe aufweist, die 1/4 einer Wirbelschichthöhe oder weniger beträgt;
eine Länge der Verbindungsöffnung 100 mm oder weniger beträgt;
ein Abstand zwischen einem Einlass der Verbindungsöffnung und einer Endfläche einer stromaufwärts befindlichen Düse größer als 150 mm ist, und ein Abstand zwischen einem Auslas der Verbindungsöffnung und einer Endfläche einer stromabwärts befindlichen Düse größer als 50 mm ist, falls die Gaseinspritzdüse ein Gas in einer beinahe senkrechten Richtung aufwärts einspritzt;
der Abstand zwischen dem Einlass der Verbindungsöffnung und der Endfläche der stromaufwärts befindlichen Düse größer als 200 mm ist, und der Abstand zwischen dem Auslass der Verbindungsöffnung und der Endfläche der stromabwärts befindlichen Düse größer als 100 mm ist, falls die Gaseinspritzdüse ein Gas in einer beinahe waagerechten Richtung einspritzt; der Abstand zwischen dem Einlass der Verbindungsöffnung und der Endfläche der stromaufwärts befindlichen Düse größer als 200 mm ist, und der Abstand zwischen dem Auslas der Verbindungsöffnung und der Endfläche der stromabwärts befindlichen Düse größer als 100 mm ist, falls die Gaseinspritzdüse ein Gas schräg abwärts einspritzt.

2. Mehrfach geteilter Wirbelschichtreaktor nach Anspruch 1, wobei eine untere Fläche der Verbindungsöffnung über einem Gaseinspritzabschnitt der Gaseinspritzdüse angeordnet ist.

3. Mehrfach geteilter Wirbelschichtreaktor nach Anspruch 1 oder 2, wobei ein Durchmesser der Öffnung an der stromaufwärts befindlichen Seite der Verbindungsöffnung zur stromabwärts befindlichen Seite hin allmählich verringert wird.

4. Mehrfach geteilter Wirbelschichtreaktor nach Anspruch 1 oder 2, wobei ein unterer Oberflächenabschnitt der Öffnung an der stromaufwärts befindlichen Seite der Verbindungsöffnung von einer Endfläche der Trennplatte zur stromaufwärts befindlichen Seite vorspringt.

5. Mehrfach geteilter Wirbelschichtreaktor nach Anspruch 4, wobei ein Eckenabschnitt einer oberen Fläche eines vorspringenden Abschnitts schräg geschnitten ist.

6. Mehrfach geteilter Wirbelschichtreaktor nach Anspruch 4, wobei eine obere Fläche eines vorspringenden Abschnitts von der stromaufwärts befindlichen Seite zur stromabwärts befindlichen Seite abwärts geneigt ist.

7. Mehrfach geteilter Wirbelschichtreaktor nach Anspruch 1, 2 oder 3, wobei die Verbindungsöffnung von der stromaufwärts befindlichen Seite zur stromabwärts befindlichen Seite abwärts geneigt ist.

8. Mehrfach geteilter Wirbelschichtreaktor nach Anspruch 6 oder 7, wobei ein Neigungswinkel größer als ein Schüttwinkel der Rohmaterialfeinstoffe ist.

9. Mehrfach geteilter Wirbelschichtreaktor nach Anspruch 1, wobei ein unterer Oberflächenabschnitt der Öffnung an der stromabwärts befindlichen Seite der Verbindungsöffnung von einer Endfläche der Trennplatte zur stromabwärts befindlichen Seite vorspringt.

10. Mehrfach geteilter Wirbelschichtreaktor nach Anspruch 9, wobei ein Eckenabschnitt einer oberen Fläche eines vorspringenden Abschnitts schräg geschnitten ist.

11. Mehrfach geteilter Wirbelschichtreaktor nach Anspruch 1, wobei die Verbindungsöffnung von beiden Endflächen der Trennplatte an der stromaufwärts und an der stromabwärts befindlichen Seite vorspringt.

12. Mehrfach geteilter Wirbelschichtreaktor nach Anspruch 1, wobei eine oder mehr Gaseinspritzdüsen in einem Mittelabschnitt der Verbindungsöffnung bereitgestellt sind, und ein Reaktionsgas von der Gaseinspritzdüse in die Verbindungsöffnung eingespritzt wird.

13. Mehrfach geteilter Wirbelschichtreaktor nach Anspruch 12, wobei ein poröses Material als eine Spitze der Gaseinspritzdüse verwendet wird.

14. Mehrfach geteilter Wirbelschichtreaktor nach Anspruch 12, wobei eine Spitze der Gaseinspritzdüse schräg von der stromaufwärts befindlichen Seite zur stromabwärts befindlichen Seite gebogen ist.

## Revendications

1. Réacteur à lit fluidisé à séparations multiples du type à bullage pour traiter des fines de minerai tout en fluidisant des fines de matières brutes délivrées à partir de l'une des surfaces latérales du réacteur au moyen d'un gaz de réaction injecté à partir d'un grand nombre de buses d'injection de gaz disposées sur un distributeur de gaz placé sur une partie inférieure à l'intérieur du réacteur, pour ainsi décharger un produit à partir de l'autre surface latérale du réacteur, dans lequel un lit fluidisé est divisé en plusieurs compartiments par des plaques de séparation, un trou de liaison pour faire passer les matières brutes grâce à une différence de hauteur du lit fluidisé d'un compartiment situé du côté amont à un compartiment situé du côté aval est ménagé dans la partie inférieure de la plaque de séparation, une vitesse moyenne de déplacement des matières brutes passant à travers le trou de liaison est de 500 mm/seconde ou moins et un angle formé par une ligne reliant une partie de coin d'une surface supérieure du trou de liaison et un orifice d'injection de gaz par rapport à un plan horizontal est supérieur à un angle d'éboulement des fines de matières brutes dans l'une quelconque des ouvertures formées sur les côtés amont et aval du trou de liaison, le réacteur à lit fluidisé à séparations multiples satisfaisant à toutes les conditions suivantes:
une position verticale du trou de liaison a une hauteur qui représente 1/4 d'une hauteur du lit fluidisé ou moins;
une longueur du trou de liaison est de 100 mm ou plus;
lorsque la buse d'injection de gaz injecte un gaz vers le haut dans une direction presque verticale, une distance entre une entrée du trou de liaison et une surface d'extrémité d'une buse située côté amont est supérieure à 150 mm et une distance entre une sortie du trou de liaison et une surface d'extrémité d'une buse située côté aval est supérieure à 50 mm;
lorsque la buse d'injection de gaz injecte un gaz dans une direction presque horizontale, la distance entre l'entrée du trou de liaison et la surface d'extrémité de la buse située côté amont est supérieure à 200 mm et la distance entre la sortie du trou de liaison et la surface d'extrémité de la buse située côté aval est supérieure à 100 mm; et
lorsque la buse d'injection de gaz injecte un gaz obliquement vers le bas, la distance entre l'entrée du trou de liaison et la surface d'extrémité de la buse située côté amont est supérieure à 200 mm et la distance entre la sortie du trou de liaison et la surface d'extrémité de la buse située côté aval est supérieure à 100 mm.

2. Réacteur à lit fluidisé à séparations multiples selon la revendication 1, dans lequel une surface inférieure du trou de liaison est positionnée au-dessus d'une partie d'injection de gaz de la buse d'injection de gaz.

3. Réacteur à lit fluidisé à séparations multiples selon la revendication 1 ou 2, dans lequel un diamètre de l'ouverture située du côté amont du trou de liaison va progressivement en diminuant en direction du côté aval.

4. Réacteur à lit fluidisé à séparations multiples selon la revendication 1 ou 2, dans lequel une partie de surface inférieure de l'ouverture située du côté amont du trou de liaison fait saillie sur une surface d'extrémité de la plaque de séparation en direction du côté amont.

5. Réacteur à lit fluidisé à séparations multiples selon la revendication 4, dans lequel une partie de coin d'une surface supérieure d'une partie saillante est découpée obliquement.

6. Réacteur à lit fluidisé à séparations multiples selon la revendication 4, dans lequel une surface supérieure d'une partie saillante est inclinée vers le bas du côté amont vers le côté aval.

7. Réacteur à lit fluidisé à séparations multiples selon la revendication 1, 2 ou 3, dans lequel le trou de liaison est incliné vers le bas du côté amont vers le côté aval.

8. Réacteur à lit fluidisé à séparations multiples selon la revendication 6 ou 7, dans lequel un angle d'inclinaison est supérieur à un angle d'éboulement des fines de matières brutes.

9. Réacteur à lit fluidisé à séparations multiples selon la revendication 1, dans lequel une partie de surface inférieure de l'ouverture située du côté aval du trou de liaison fait saillie sur une surface d'extrémité de la plaque de séparation en direction du côté aval.

10. Réacteur à lit fluidisé à séparations multiples selon la revendication 9, dans lequel une partie de coin d'une surface supérieure d'une partie saillante est découpée obliquement.

11. Réacteur à lit fluidisé à séparations multiples selon la revendication 1, dans lequel le trou de liaison fait saillie sur les deux surfaces d'extrémité de la plaque de séparation du côté amont et du côté aval.

12. Réacteur à lit fluidisé à séparations multiples selon la revendication 1, dans lequel au moins une buse d'injection de gaz est prévue dans une partie médiane du trou de liaison, et un gaz de réaction est injecté à partir de la buse d'injection de gaz dans le trou de liaison.

13. Réacteur à lit fluidisé à séparations multiples selon la revendication 12, dans lequel une matière poreuse est utilisée comme bec de la buse d'injection de gaz.

14. Réacteur à lit fluidisé à séparations multiples selon la revendication 12, dans lequel un bec de la buse d'injection de gaz est courbé obliquement du côté amont vers le côté aval.
